# EUROPEAN PATENT APPLICATION

(11) **EP 3 659 829 A1**
(43) Date of publication of application: **03.06.2020**
(21) Application number: 18839228.6
(22) Date of filing: 26.06.2018
(51) Int. Cl.: B60C 17/00, B60C 5/00

(54) **TIRE**

(30) Priority: 27.07.2017 JP 2017145859
(71) Applicant: Bridgestone Corporation, Tokyo 104-8340 (JP)
(72) Inventor: SHIBATA, Masanao, Tokyo 104-8340 (JP); WATANABE, Jun, Tokyo 104-8340 (JP); SUKEGAWA, Shin, Tokyo 104-8340 (JP); OHARA, Takayuki, Tokyo 104-8340 (JP); YAMAGUCHI, Suguru, Tokyo 104-8340 (JP); HORI, Hiroki, Tokyo 104-8340 (JP); MITSUDA, Sho, Tokyo 104-8340 (JP)
(74) Representative: Oxley, Robin John George
(86) International application number: PCT/JP2018/024231
(87) International publication number: WO 2019/021724

(57) **Abstract**

A tire includes a pair of bead portions, a pair of sidewall portions arranged at an outer side in a tire radial direction of the bead portions and a tread portion arranged between the sidewall portions, and a reinforcing rubber layer is provided to the sidewall portions. The reinforcing rubber layer extends over at least a part of the tread portion from the sidewall portions. The tire further includes a sound control layer which covers at least a part of an inner circumferential surface of the tire. The sound control layer is not laminated on the reinforcing rubber layer.

## Description

### TECHNICAL FIELD

The present disclosure relates to a tire.

### BACKGROUND

Conventionally, as a tire which can perform safe running of a certain degree of distance preventing loss of load-carrying capacity of the tire even when tire internal pressure is lowered due to puncture, a so-called run flat tire, there has existed a side-reinforcing type run flat tire in which a reinforcing rubber layer with a crescent-shaped cross section is arranged at a sidewall portion of the tire.

This run flat tire supports a load by tire internal pressure at a normal running, while at a puncture running, it supports the load by the reinforcing rubber layer as a substitute. Consequently, even when air pressure inside of the tire is rapidly lowered at the time of puncture of the tire, no sudden change is generated in a vehicle's behavior, which enables safe running. Moreover, this can reduce the risk of wrong steering by a driver who is in a hurry (for example, Patent Literature 1.)

Also, generally, it is known that cavity resonance occurs in air filled in an inner cavity of a tire when a tread portion contacts to irregularities on a road surface and oscillates during running of a vehicle. This cavity resonance noise is one of noises due to the tire, and its resonance frequency is largely in a range of 180 to 300 Hz. When the cavity resonance noise is transmitted in a vehicle interior, it takes a sharp and high peak value unlike noises in other frequency ranges, and this becomes an unpleasant noise for an occupant in the vehicle interior.

As a method of reducing such cavity resonance noise, a technology of providing a sound control layer made of a sponge etc. at a side of a tire inner cavity of an inner liner has been known (for example, Patent Literature 2.)

### CITATION LIST

### Patent Literature

PTL 1: Japanese Patent Laid-Open No. 2015-033958
PTL 2: Japanese Patent Laid-Open No. 2017-065673

### SUMMARY

### (Technical Problem)

However, in the side-reinforcing type run flat tire including the reinforcing layer at the sidewall portion, an amount of heat buildup at the time of load rolling of the tire increases compared with a tire not including the reinforcing rubber layer. Consequently, in the side-reinforcing type run flat tire, when the sound control layer is provided to reduce the cavity resonance noise, heat dissipation of the tire is lowered, so that there has been a risk of lowering durability of the tire, in particular, durability of the tire in run flat running in which an amount of heat buildup in the reinforcing rubber layer especially increases. Also, in the run flat tire, improving steering stability in run flat running has been desired.

Accordingly, an object of the present disclosure is to provide a tire which improves durability and steering stability of the tire in run flat running while reducing cavity resonance noise.

### (Solution to Problem)

According to a tire of the present disclosure, there is provided a tire which includes a pair of bead portions, a pair of sidewall portions arranged at an outer side in a tire radial direction of the bead portions and a tread portion arranged between the sidewall portions, and in which a reinforcing rubber layer is provided to the sidewall portions, wherein the reinforcing rubber layer extends over at least a part of the tread portion from the sidewall portions, the tire further includes a sound control layer which covers at least a part of an inner circumferential surface of the tire, the sound control layer is not laminated on the reinforcing rubber layer.

Additionally, "the sound control layer is ... laminated on the reinforcing rubber layer" means that the sound absorption layer is directly adhered on the reinforcing rubber layer, or that the sound control layer is indirectly adhered to the reinforcing rubber layer through other components. In a case where the sound control layer is indirectly adhered on the reinforcing rubber layer, "on the reinforcing rubber layer" means on an inner circumferential surface of the tire corresponding an extending region of the reinforcing rubber layer.

Also, in the present specification, "a bead portion" refers to a region from a bead toe of the tire to a separation point of a rim to be assembled to the tire. More specifically, this refers to a region extending between the bead toe and a normal line at an outer surface of the tire made at the separation point of the rim.

Also, in the present specification, "a sidewall portion" refers to a region from the separation point of the rim to be assembled to the tire to a tread ground contact edge. More specifically, this refers to a region extending between the normal line at the outer surface of the tire made at the separation point of the rim and a normal line at the outer surface of the tire made at the tread ground contact edge. Additionally, "the tread ground contact edge" refers to both ends in a tire width direction of a tread surface (an outer circumferential surface over the entire circumference of the tire which contacts to a road surface when a tire assembled to a rim and filled with a predetermined internal pressure is rolled in a state that the maximum load is applied.)

Additionally, in the present specification, "a tread portion" refers to a region between the tread ground contact edges. More specifically, this refers to a region extending between a normal line at the outer surface of the tire made at one tread ground contact edge and a normal line at the outer surface of the tire made at the other tread ground contact edge.

Additionally, the "rim" is an industrial standard which is effective for a region in which a tire is produced and used, and refers to an approved rim in an application size (this refers to a measuring rim in STANDARDS MANUAL of ETRTO and a design rim in YEAR BOOK of TRA) described currently or in the future in JATMA YEAR BOOK of JATMA (the Japan Automobile Tyre Manufacturers Association) in Japan, STANDARDS MANUAL of ETRTO (The European Tyre and Rim Technical Organisation) in Europe, and YEAR BOOK of TRA (The Tire and Rim Association, Inc.) in the United States etc. (In other words, the "rim" described above includes, in addition to the current size, a size which can be included in the industrial standard in the future. As an example of "size described...in the future," a size described as "FUTURE DEVELOPMENTS" in STANDARDS MANUAL 2013 Edition of ETRTO can be listed.) However, in a case of a size not described in the industrial standard, a rim with a width corresponding to a bead width of the tire can be adopted.

Also, "a predetermined internal pressure" refers to air pressure (maximum air pressure) corresponding to maximum load capability of a single wheel in applicable size and ply rating described in the above-described JATMA YEAR BOOK, and in a case of a size not described in the industrial standard, air pressure (maximum air pressure) corresponding to maximum load capability defined for each vehicle to which a tire is installed can be adopted. Further, "a maximum load" refers to a load corresponding to the maximum load capability. Additionally, an air described herein can be replaced with inert gas such as nitrogen gas and others.

Also "a standard state" which is described later in the present specification refers to a state that the tire is assembled to a rim and filled with a predetermined internal pressure to be unloaded.

### (Advantageous Effect)

According to the present disclosure, durability and steering stability of a tire in a run flat running can be improved while a cavity resonance noise is reduced.

### BRIEF DESCRIPTION OF THE DRAWINGS

In the accompanying drawings:
FIG. 1 is a partial cross-sectional view illustrating a cross section in a tire width direction of a half portion of a tire according to an embodiment of the present disclosure;
FIG. 2 is a partial cross-sectional view illustrating a cross section in a tire width direction of a half portion of a tire according to another embodiment of the present disclosure.

### DETAILED DESCRIPTION

Hereinafter, embodiments of a tire according to the present disclosure is exemplified with reference to the drawings.

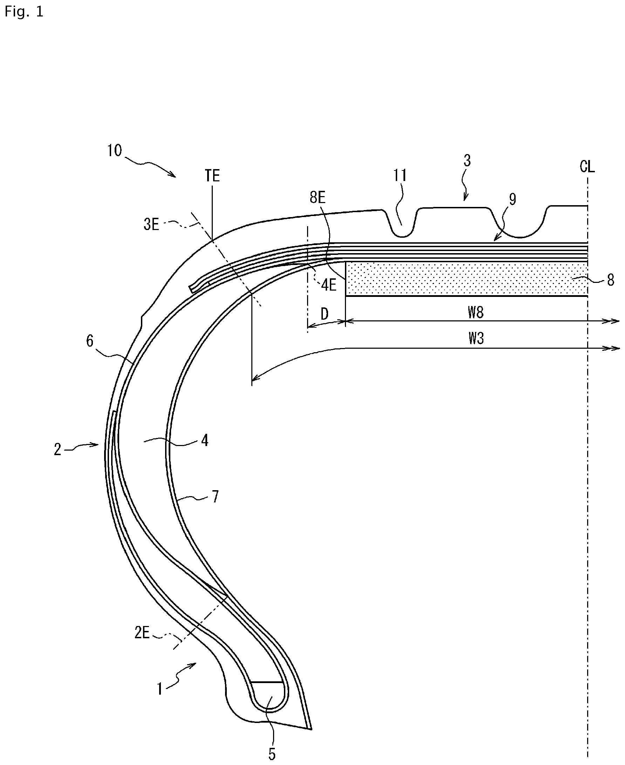

FIG. 1 is a partial cross-sectional view illustrating a cross section in a tire width direction of a half portion of a tire 10 according to an embodiment of the present disclosure. Additionally, in this embodiment, a half portion of the tire 10 which is not illustrated has the same configuration as that of the half portion of the tire 10 which is illustrated.

The tire 10 according to this embodiment includes a pair of bead portions 1, a pair of sidewall portions 2 arranged radially outside of the bead portions 1 and a tread portion 3 arranged between the sidewall portions 2, and in this embodiment, to each of the sidewall portions 2, a reinforcing rubber layer 4 with a crescent-shaped cross section is provided. More specifically, the tire 10 includes a carcass 6 which straddles bead cores 5 respectively provided to each of the pair of bead portion in a toroidal shape and an inner liner 7 which straddles the bead cores 5 at an inner circumferential side of the tire than the carcass 6 and constitutes an inner circumferential surface of the tire, the reinforcing rubber layer 4 is arranged between the carcass 6 and the inner liner 7.

In other words, the inner liner 7 in this embodiment extends over the substantially entire inner circumferential surface of the tire from a portion near a bead toe of one bead portion 1 to a portion near a bead toe of the other bead portion 1. Accordingly, in the sidewall portion 2 of the tire 10, from the inner circumferential side of tire 10, the inner liner 7, the reinforcing rubber layer 4 and the carcass 6 are laminated in this order.

Also, the reinforcing rubber layer 4 in this embodiment extends over a region in a tire radial direction of the sidewall portion 2 from a portion near an inner end 2E in the tire radial direction of the sidewall portion 2 to an inter side in the tire radial direction, and in this embodiment, extends over at least a part of the tread portion 3. In other words, the reinforcing rubber layer 4 in this embodiment terminates at an inner side in the tire width direction than an outer end 3E in the tire width direction of the tread portion 3.

Additionally, the reinforcing rubber layer 4 continues in a tire circumferential direction and extends annularly.

Also, the tire 10 according to this embodiment includes a sound control layer 8 made of a porous material in this embodiment at least a part of the inner circumferential surface of the tire (in this embodiment, a region including a tire equator surface CL at an inner circumferential surface of the tread portion 3.) The sound control layer 8 is arranged such that an end 8E in the tire width direction of the sound control layer 8 is positioned at an inner side in the tire width direction than an outer end 4E in the tire radial direction of the reinforcing rubber layer 4, that is, at a side of the tire equator surface CL.

In this way, the tire 10 according to this embodiment is arranged such that the sound control layer 8 is not laminated on the reinforcing rubber layer 4.

As described above, in the tire 10 according to this embodiment, since the sound control layer 8 which covers at least a part of the inner circumferential surface of the tire is provided, cavity resonance noise during running of the vehicle can be reduced.

Also, since the sound control layer 8 is not laminated on the reinforcing rubber layer 4, heat dissipation at the reinforcing rubber layer 4 is not inhibited by the sound control layer 8, which prevents heat storage in the reinforcing rubber layer 4. Accordingly, since temperature raise in the reinforcing rubber layer 4 which is significant in the side-reinforcing type run flat tire is inhibited, durability of the tire in run flat running can be improved.

Additionally, the sound control layer 8 according to this embodiment is constituted by a sponge material. The sponge material is a cotton-like porous structure, and for example, includes a so-called sponge having an interconnected cell in which a rubber and synthetic resin are foamed. Also, the sponge material includes a web-like sponge in which animal fiber, plant fiber or synthetic fiber etc. are tangled to be integrally connected other than the above-described sponges. Additionally, the above-described "porous structure" means also including a structure having closed pore not limited to a structure having an interconnected cell.

The above-described sponge material convers vibration energy of air due to vibration of gaps formed on a surface or an inner portion to thermal energy. Due to this, cavity resonance in an inner cavity of the tire is inhibited, and as a result, a road noise can be reduced. Moreover, the sponge material is easy to be deformed such as contraction and flection. Consequently, even when the sound control layer 8 made of the sponge material is laminated on the inner circumferential surface of a tread, no substantial influence is provided to deformation of the tire during running of the vehicle. In other words, also as a configuration of laminating the sound control layer 8 on the inner circumference of the tread, little adverse effect is provided to steering stability etc.

As a material for the sponge, for example, synthetic resin sponges such as an ether polyurethane sponge, an ester polyurethane sponge and a polyethylene sponge, and rubber sponges such as a chloroprene rubber sponge (CR sponge), an ethylene propylene rubber sponge (EPDM sponge) and a nitrile rubber sponge (NBR sponge) can be listed. Considering viewpoints such as sound control, lightness, foam adjustability and durability, a polyurethane or polyethylene sponge etc. including the ether polyurethane sponge is preferably used.

Additionally, the material constituting the sound control layer 8 is not limited to the above-described sponges, and any material may be used as long as it can execute control such that a cavity resonance energy is lowered due to mitigation and absorption of the cavity resonance energy and conversion to another energy (for example, thermal energy) etc.

Also, a specific gravity of the sponge material is preferably 0.005 to 0.06, more preferably 0.01 to 0.04, and especially preferably, 0.01 to 0.03 considering a balance between increase of a weight of the tire and an effect of inhibiting cavity resonance.

Further, a volume of the sound control layer 8 is preferably 0.4% to 20% of the entire volume of the inner cavity of the tire. By securing 0.4% or more of the volume of the sound control layer 8 to the entire volume of the inner cavity of the tire, a reduction effect of a desired amount (for example, 2dB or more) of cavity resonance energy is easily achieved. The sound control layer 8 is preferably 1% or more of the entire volume of the inner cavity of the tire, more preferably 2% or more, and especially preferably, 4% or more. On the other hand, improvement of the reduction effect of the cavity resonance cannot be expected even with a configuration that the volume of the sound control layer 8 exceeds 20% of the entire volume of the inner cavity of the tire. Rather, there is a possibility of deteriorating a weight balance of a tire assembly in which the tire is assembled to a rim. From such viewpoint, the volume of the sound control layer 8 is preferably 16% or less of the entire volume of the inner cavity of the tire, and 10% or less is especially preferable. Additionally, this volume ratio is irrelevant to the number of sound control layers 8. In other words, in a case where there is a plurality of sound control layers 8, the same effect can be obtained as long as the sum of the volumes of all of the plurality of sound control layers 8 satisfies the above relationship of the volume ratio.

Additionally, in the present disclosure, when the outer end 4E in the tire radial direction of the reinforcing rubber layer 4 is overlapped on the outer end 8E in the tire width direction of the sound absorption layer 8, more specifically, when the outer end 8E in the tire width direction of the sound absorption layer 8 is located on a line in the tire radial direction (illustrated in a phantom line in the drawing) extending toward the outer end 4E in the tire radial direction of the reinforcing rubber layer 4, the sound absorption layer 8 is deemed as not laminated on the reinforcing rubber layer 4.

Moreover, in the present disclosure, as described above, it is essential that the sound absorption layer 8 is not laminated on the reinforcing rubber layer 8, that is, it is essential that the sound absorption layer 8 is not directly adhered on the reinforcing rubber layer 8, or that the sound control layer 8 is not indirectly adhered to the reinforcing rubber layer through other components such as the inner liner 7 from a viewpoint of not inhibiting heat dissipation in the reinforcing rubber layer 4. Accordingly, for example, a part of the sound absorption layer 8 may cover the reinforcing rubber layer 4 having a space with the reinforcing rubber layer 4. In such a case, heat generated in the reinforcing rubber layer 4 is dissipated via the space.

Also, in the tire 10 according to this embodiment, the reinforcing rubber layer 4 extends over at least a part of the tread portion 3 from the sidewall portion 2. In this way, when the reinforcing rubber layer 4 does not terminate in the sidewall portion 2 and extends to an inner side in the tire width direction than the outer end 3E in the tire width direction of the tread portion 3, rigidity in the tire radial direction and the tire width direction at the time of run flat running is further enhanced, which improves steering stability at the time of run flat running.

However, when the reinforcing rubber layer 4 is allowed to extend over at least a part of the tread portion 3 in addition to the sidewall portion 2, the volume of the reinforcing rubber layer 4 with respect to the tire 10 relatively increases, so that an amount of heat buildup of the tire 10 also increases.

Moreover, especially when the reinforcing rubber layer 4 is allowed to extend over at least a part of the tread portion 3, in addition to preventing lamination of the sound control layer 8 on the reinforcing rubber layer 4, seeing in a cross-section in the tire width direction in a standard state of the tire, the sound control layer 8 is preferably separated from the reinforcing rubber layer 4 by 3.0 mm or more and 15.0 mm or less along the inner circumferential surface of the tire.

In other words, the outer end 4E in the tire radial direction of the reinforcing rubber layer 4 is preferably separated from the outer end 8E in the tire width direction of the sound control layer 8 by 3.0 mm or more and 15.0 mm or less along the inner circumferential surface of the tire.

When a clearance distance D between the reinforcing rubber layer 4 and the sound control layer 8 is 3.0 mm or more, the reinforcing rubber layer 4 is fully separated from the sound control layer 8 which prevents heat dissipation in the reinforcing rubber layer 4 and heat dissipation in the reinforcing rubber layer 4 is more difficult to be inhibited, which further improves durability of the tire at the time of run flat running.

If the clearance distance D is 15.0 mm or less, the volume and a surface area of the sound control layer 8 can be fully secured, thereby reducing a cavity resonance noise more fully.

Also, the amount of heat buildup in the reinforcing rubber layer 4 is proportional with the volume of the reinforcing rubber layer 4. Accordingly, in this embodiment, seeing in a cross section in the tire width direction in the standard state of the tire, a value obtained by dividing the clearance distance D (mm) between the reinforcing rubber layer 4 and the sound control layer 8 by the cross-sectional area (mm²) of the reinforcing rubber layer 4 is preferably 0.006/mm or more from a viewpoint of further improving durability of the tire at the time of run flat running.

Also, in the tire 10 according to this embodiment, the sound control layer 8 extends to a region including the tire equator surface CL at the inner circumferential surface of the tread portion 3, and seeing in a cross section in the circumferential direction along the tire equator surface CL in the standard state of the tire, a length of the sound control layer 8 along the inner circumferential surface of the tire is preferably 0.7 times larger or more of a length of the inner circumferential surface of the tire.

When the sound control layer 8 is arranged at a region including the tire equator surface CL, the sound control layer 8 can be arranged relatively widely, whereby the volume of the sound absorption layer 8 can be increased. Further, seeing in a cross section in the tire circumferential direction, when the length of the sound control layer 8 along the inner circumferential surface of the tire is 0.7 times larger or more of the length of the inner circumferential surface of the tire, the volume of the sound control layer 8 can be further increased, whereby the cavity resonance noise can be reduced more reliably.

Additionally, in the present disclosure, unless the sound control layer is not laminated on the reinforcing rubber layer, the sound control layer can be arranged to be divided into one side and the other side of the tire equator surface CL, and moreover, the sound control layer cam be arranged continuously or intermittently in the tire circumferential direction.

Also, in the tire 10 according to the present disclosure, seeing in a cross section in the tire width direction in the standard state of the tire, a length W8 of the sound control layer 8 along the inner circumferential surface of the tire is 0.6 or more and 0.9 or less of a length W3 of the tread portion 3 along the inner circumferential surface of the tire. In other words, a ratio of W8/W3 is 0.6 or more and 0.9 or less.

If the ratio is 0.6 or more, the sound absorption layer 8 is arranged relatively widely, and the volume and the surface area of the sound absorption layer 8 increase, whereby the cavity resonance noise can be reduced more fully.

If the ratio is 0.9 or less, heat dissipation at an inner surface of the tire of tread portion 3 is difficult to be prevented, which inhibits temperature raise of the entire tire during running of the vehicle. Consequently, even at the time of run flat running, durability of the tire can be further improved.

Additionally, in FIG. 1, the sound absorption layer 8 has a rectangular cross section. However, the cross-sectional shape of the sound absorption layer 8 may be any shape such as a triangle, a trapezoid, a circle, an oval figure or a combination thereof.

Also, when a surface at the inner circumferential side of the sound absorption layer 8 is wave-shaped, zigzag-shaped, or step-like irregular-shaped or irregular-shaped having a plurality of protrusions for example, the surface area of the sound control layer 8 increases, whereby the cavity resonance noise can be reduced effectively.

Also, the tire 10 according to the present disclosure includes a belt 9 at an outer circumferential side of the carcass 6 at the tread portion 3. In this embodiment, the belt 9 is constituted by at least one layer of (two layers in this embodiment) inclined belt layer which covers by rubber a plurality of cords extending inclined to the tire circumferential direction and at least one layer of (one layer in this embodiment) circumferential belt layer which is arranged outside in the tire radial direction of the inclined belt layer and covers by rubber a plurality of cords extending along the tire circumferential direction. In this embodiment, the belt 9 extends from the tire equator surface CL to both sides in the tire width direction, and terminates at an outer side in the tire width direction than the outer end 3E in the tire width direction of the tread portion 3.

However, in the tire according to the present disclosure, the configuration of the belt is not limited to this.

Also, in this embodiment, a not illustrated half portion of the tire 10 has the same configuration as the illustrated half portion of the tire 10. However, in the present disclosure, any configuration may be adopted as long as the sound absorption layer 8 is not laminated on the reinforcing rubber layer 4 in at least one half portion of the tire, and a positional relationship between the sound absorption layer 8 and the reinforcing rubber layer 4 in the other half portion of the tire is not limited.

However, stating from a viewpoint of obtaining more reliably a reduction effect of the cavity resonance noise and a durability improving effect of the tire at the time of run flat running, in both one half portion and the other half portion of the tire, the sound absorption layer 8 is preferably not laminated on the reinforcing rubber layer 4.

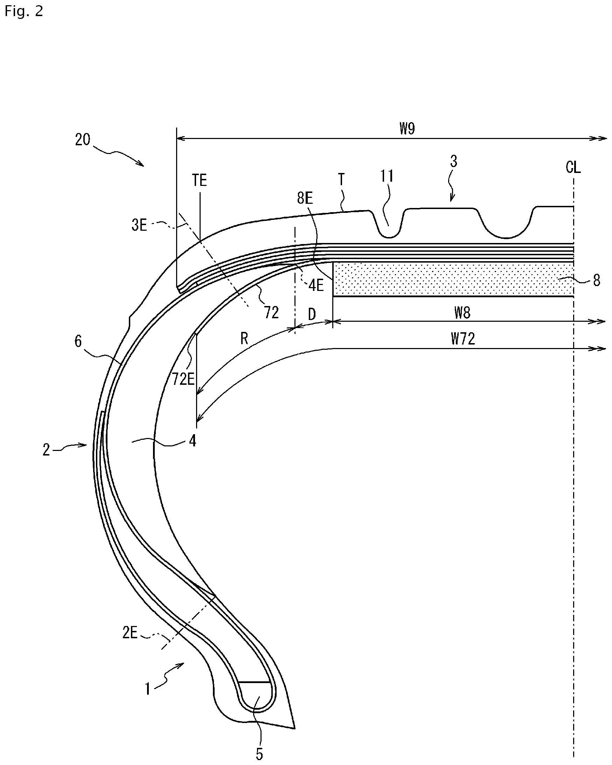

Next, with reference to FIG. 2, a tire 20 according to another embodiment of the present disclosure is explained. FIG. 2 is a partial cross-sectional view illustrating a cross section in the tire width direction of a half portion of the tire 20 according to another embodiment of the present disclosure.

The tire 20 has the same configuration as the tire 10 according to the former embodiment illustrated in FIG. 1 excluding the matter that, seeing in a cross section in the tire width direction in a standard state, an end 72E in the tire width direction of an inner liner 72 terminates at the sidewall portion 2. Consequently, the same configurations as those of the tire 10 are applied the same reference signs and an explanation thereof is omitted.

The inner liner 72 in the tire 20 according to this embodiment extends to straddle a region at an outer side in the tire radial direction of the pair of sidewall portions 2. In other words, in this embodiment, the inner liner 72 extends about the tire equator surface CL over a region in the tire width direction of the tread portion 3 on both outer sides in the tire width direction from the tire equator surface CL, and further, terminates outside in the tire width direction than the outer end 3E in the tire width direction of the tread portion 3. The end 72E in the tire width direction of the inner liner 72 in this embodiment is located outside in the tire width direction than a tread contact edge TE and outside in the tire radial direction than the maximum width position of the tire 20.

Accordingly, the inner liner 72 of this embodiment is laminated, in the sidewall portion 2, only at a radially outer side portion of the tire of the reinforcing rubber layer 4 arranged at the sidewall portion 2. In other words, in the radially outer side portion of the tire of the reinforcing rubber layer 4, from an inner circumferential side of the tire, the inner liner 72, the reinforcing rubber layer 4 and the carcass 6 are laminated in this order, while at an inner side in the tire radial direction than the corresponding portion of the reinforcing rubber layer 3, from the inner circumferential side of the tire, the reinforcing rubber layer 4 and the carcass 6 are laminated in this order, and the inner liner 72 is not laminated.

In this way, in the tire 20 according to this embodiment, the inner liner 72 constitutes an inner circumferential surface of the tire 20 in an extending region of the inner liner 72, while the reinforcing rubber layer 4 constitutes the inner circumferential surface of the tire 20 in a non-extending region of the inner liner 72, that is, an inner region in the tire radial direction of the sidewall portion 2.

Also, in the tire 20 according to this embodiment, in the same manner as the tire 10 according to the former embodiment described above, the sound absorption layer 8 is not laminated on the reinforcing rubber layer 4.

In this way, in the tire 20, in addition to the matter that the sound absorption layer 8 is not laminated on the reinforcing rubber layer 4, the inner liner 72 is not laminated over the tire radial direction on the reinforcing rubber layer 4. In other words, the inner liner 72 is laminated only a part of the reinforcing rubber layer 4.

With this configuration, a part of the reinforcing rubber layer 4 is exposed on the inner cavity of the tire and heat dissipation in the reinforcing rubber layer 4 can be effectively executed, so that durability of the tire at the time of run flat running can be increased in a higher order.

Also, generally, for an inner liner, a rubber having a higher heat buildup (tan delta is large) compared with other portions of the tire is used. Consequently, by reducing an arrangement region of the inner liner, durability of the tire can be further improved also from a viewpoint that an amount of heat buildup of the tire can be reduced in a normal running of the vehicle, without mentioning at the time of run flat running.

Additionally, when the reinforcing rubber layer 4 is provided to the sidewall portion 2 as in the tire 20 according to this embodiment, an internal pressure is maintained by the reinforcing rubber layer 4 even when the inner liner 72 is not arranged over the entire region of the inner circumferential surface of the tire.

Also, in the tire 20 according to this embodiment, seeing in a cross section in the tire width direction in the standard state, the inner liner 72 and the belt 9 arranged at an outer side in the tire radial direction of the carcass 6 in the tread portion 3 preferably satisfy the following relational expression. In other words, in a cross-sectional view in the tire width direction, a length W72 along the inner circumferential surface of the tire of the inner liner 72 and a belt width W9 of the belt 9 preferably satisfy the relational expression "W9≤W72≤W9+20 mm."

If the length W72 along the inner circumferential surface of the tire of the inner liner 72 is the belt width W9 of the belt 9 or more, retention of internal pressure of the tire can be preferably maintained, and durability of the belt 9 can be held.

Also, if the length W72 along the inner circumferential surface of the tire of the inner liner 72 is a length of the belt width W9 plus 20 mm or less, unnecessary heat buildup due to the inner liner 72 can be inhibited.

Additionally, in this embodiment, an overlapped length R of the inner liner 72 along the inner circumferential surface of the tire and the reinforcing rubber layer 4 is approximately 25% of a length along the inner circumferential surface of the tire of the reinforcing rubber layer 4. However, the overlapped length R can be arbitrarily determined such as 20% or less, 15% or less and 10% or less.

Additionally, in the tire 20 according to this embodiment, a preferable arrangement range of the reinforcing rubber layer 4, a preferable arrangement range as well as tire widthwise length of the sound absorption layer 8, a preferable material, specific gravity, ratio to the entire volume of the inner cavity of the tire of the sound absorption layer 8, a preferable cross-sectional shape of the sound absorption layer 8 and a preferable clearance distance between the reinforcing rubber layer 4 ad the sound absorption layer 8 etc. are as described in the tire 10 according to the former embodiment.

Also, two circumferential grooves 11 are provided at a tread surface T of the tread portion 3 in half portions of the tires 10, 20 illustrated in FIGS. 1 and 2. However, not limited to these embodiments, the tire according the present disclosure may include one, three or more circumferential grooves at the half portion of the tire, or no circumferential groove may be provided. Further, in accordance with a desired property, any groove etc. such as a width direction groove or sipe may be provided.

### EXAMPLES

Hereinafter, examples of the present disclosure are explained. However, the present disclosure is not at all limited to the following examples.

A tire of an example and a tire of a comparative example (both tires have the tire size of 205/55R16) were produced experimentally under the specification illustrated in Table 1, and a reduction effect of a cavity resonance noise and durability at the time of run flat running were evaluated.

A tire 1 in the example is a tire illustrated in FIG. 1 having the reinforcing rubber layer 4 at the sidewall portion 2, in which the sound absorption layer 8 is provided at least a part of the inner circumferential surface of the tire and the sound absorption layer 8 is not laminated on the reinforcing rubber layer 4. Additionally, the clearance distance D between the reinforcing rubber layer 4 and the sound absorption layer 8 in the tire 1 in the example is 3.0 mm.

A tire 1 in the comparative example is the same tire as the tire 1 in the example excluding that the former does not include the sound absorption layer 8.

While a tire 2 in the comparative example includes the sound absorption layer, this is the same as the tire in the example excluding the matter that the entire sound absorption layer is laminated on the reinforcing rubber layer. In other words, in the sound absorption layer in the tire 2 in the comparative example, two sound absorption layers having a half of a length along the inner circumferential surface of the tire of the sound absorption layer 8 in the tire 1 in the example are respectively arranged on the reinforcing rubber layer provided at one sidewall portion and the reinforcing rubber layer provided at the other sidewall portion. Additionally, "an overlapped length" of the tire 2 of the comparative example described in Table 1 is an overlapped length of the sound control layer and the reinforcing rubber layer in one sidewall portion, and also in the other sidewall portion, the sound control layer is laminated on the reinforcing rubber layer in the same manner.

While tires 3, 4 in the comparative example include the sound absorption layer, this is the same as the tire 1 of the example excluding the matter that a part of the sound absorption layer is laminated on the reinforcing rubber layer. In other words, the sound absorption layer in the tires 3, 4 in the comparative example is wider in the tire width direction than the sound absorption layer 8 in the tire 1 in the example, and both end portions of the sound absorption layer are laminated on the reinforcing rubber layer provided to the sidewall portion.

Additionally, in the tire 3 in the comparative example, an overlapped length of the sound absorption layer and the reinforcing rubber layer along the inner circumferential surface of the tire is 10 mm, and the corresponding overlapped length in the tire 4 of the comparative example is 1 mm. Additionally, "an overlapped length" of the tires 3, 4 in the comparative example described in Table 1 is an overlapped length of the reinforcing rubber layer at one end in the tire width direction of the sound control layer, and the other end in the tire width direction of the sound control layer is also laminated on the reinforcing rubber layer in the same manner.

Tires 2 to 6 in the example are the same as the tire 1 in the example excluding the matter that the clearance distance D along the inner circumferential surface of the tire between the reinforcing rubber layer 4 and the sound control layer 8 is different.

### [Reduction effect of cavity resonance noise]

Each sample tire was attached to a rim (16 x 6.5J), filled with 250 kPa (corresponding pressure) of internal pressure, attached to a drum tester including an iron drum with a diameter of 1.7 m having an iron plate surface and rolled at a constant rate under the condition of a load mass of the tire of 5.0 kN and a speed of 60 km/h. At that time, from a frequency spectrum obtained by measuring a tire axial force (Fz) in the up-down direction using a wheel force sensor, a peak value of frequency corresponding to the cavity resonance noise was measured, thereby measuring the cavity resonance noise of each sample tire.

The results are illustrated in Table 1. The amount of reduction from the peak value of the cavity resonance noise generated at the tire 1 in the comparative example is illustrated as the amount of reduction (dB) of the cavity resonance noise. The larger numerical value represents that the amount of reduction of the cavity resonance noise is larger.

### [Run flat durability]

In the drum tester, a load corresponding to 65% of the maximum load in accordance with LI (Load Index) is applied, running at a speed of 80 km/h is executed, and using 160 km (2 hours) as the completion condition, a distance at which a tire is broken down and cannot executed running was measured. Assuming that run flat durability (durability at the time of run flat running) in the tire 1 in the comparative example is 100, results of exponent evaluation are represented in Table 1. The larger numerical value represents that run flat durability of the tire is excellent.

As illustrated in Table 1, in the tires in the examples, compared to the tires in the comparative examples, durability at the run flat running is improved while the cavity resonance noise is reduced.

**[Table 1]**

| | Existence of a sound absorption layer (on a tire equator surface) | Existence of a sound absorption layer (on a reinforcing rubber layer) | Clearance distance D (mm) | Overlapped length (mm) | The amount of reduction of cavity resonance noise (dB) | Run flat durability (INDEX) |
|---|---|---|---|---|---|---|
| Tire in an example 1 | Existence | Non -existence | 3 | - | 1.7 | 100 |
| Tire in a comparative example 1 | - | - | - | - | 0 | 100 |
| Tire in a comparative example 2 | Non-existence | Existence | - | 50 | 1.5 | 87 |
| Tire in a comparative example 3 | Existence | Existence | - | 10 | 2.1 | 90 |
| Tire in a comparative example 4 | Existence | Existence | - | 1 | 1.7 | 92 |
| Tire in an example 2 | Existence | Non -existence | 0 | - | 1.8 | 98 |
| Tire in an example 3 | Existence | Non -existence | 1 | - | 1.7 | 99 |
| Tire in an example 4 | Existence | Non -existence | 5 | - | 1.6 | 100 |
| Tire in an example 5 | Existence | Non -existence | 15 | - | 1.2 | 100 |
| Tire in an example 6 | Existence | Non -existence | 30 | - | 1 | 100 |

### REFERENCE SIGNS LIST

1 Bead portion
2 Sidewall portion
3 Tread portion
4 Reinforcing rubber layer
5 Bead core
6 Carcass
7, 72 Inner liner
8 Sound control layer
9 Belt
10, 20 Tire
11 Circumferential groove
2E Inner end in a tire radial direction of a sidewall portion
3E Outer end in a tire width direction of a tread portion
4E Outer end in a tire radial direction of a reinforcing rubber layer
8E Outer end in a tire width direction of a sound absorption layer
W3 Tire widthwise length along an inner circumferential surface of a tire of a tread portion
W72 Tire widthwise length along an inner circumferential surface of a tire of an inner liner
W8 Tire widthwise length along an inner circumferential surface of a tire of a sound absorption layer
W9 Belt width
CL Tire equator surface
D Clearance distance
R Overlapped distance
TE Tread ground contact edge

## Claims

1. A tire which includes a pair of bead portions, a pair of sidewall portions arranged at an outer side in a tire radial direction of the bead portions and a tread portion arranged between the sidewall portions, and in which a reinforcing rubber layer is provided to the sidewall portions,
wherein the reinforcing rubber layer extends over at least a part of the tread portion from the sidewall portions,
the tire further includes a sound control layer which covers at least a part of an inner circumferential surface of the tire,
the sound control layer is not laminated on the reinforcing rubber layer.

2. The tire according to claim 1, wherein the sound control layer extends in a region including a tire equator surface at an inner circumferential surface of the tread portion,
when the tire is assembled to a rim and filled with a predetermined internal pressure to be unloaded, seeing in a cross section in a tire circumferential direction along a tire equator surface in a standard state, a length of the sound control layer along the inner circumferential surface of the tire is 0.7 times larger or more of a length of the inner circumferential surface of the tire.

3. The tire according to claims 1 or 2, wherein, seeing in a cross section in a tire circumferential direction in the standard state, the reinforcing rubber layer is separated from the sound control layer by 3.0 mm or more and 15.0 mm or less along the inner circumferential surface of the tire.

4. The tire according to claims 2 or 3, wherein, seeing in a cross section in a tire width direction in the standard state, a length of the sound control layer along the inner circumferential surface of the tire is 0.6 or more and 0.9 or less of a length of the tread portion along the inner circumferential surface of the tire.
